# EUROPÄISCHE PATENTANMELDUNG

(11) **EP 4 575 557 A1**
(43) Veröffentlichungstag der Anmeldung: **25.06.2025**
(21) Anmeldenummer: 24218716.9
(22) Anmeldetag: 10.12.2024
(51) Int. Cl.: G01S 7/40

(54) **SENDE-/EMPFANGSGERÄT FÜR EIN SENDEN UND EIN EMPFANGEN EINES ELEKTROMAGNETISCHEN SIGNALS UND VERFAHREN ZUM PRÜFEN EINES SENDE-/EMPFANGSGERÄTS**

(30) Priorität: 22.12.2023 DE 102023136511
(71) Anmelder: dSPACE GmbH, 33102 Paderborn (DE)
(72) Erfinder: Lange, Niklas, 33102 Paderborn (DE)

(57) **Zusammenfassung**

Sende-/Empfangsgerät (SE) für ein Senden und ein Empfangen eines elektromagnetischen Signals (EM), wobei das elektromagnetische Signal (EM) zum Austausch mit einem Sensor zur Objektdetektion (OD) vorgesehen sind, wobei das Sende-/Empfangsgerät (SE) einen Analogteil (ANA) aufweist, der dazu eingerichtet ist,
ein erstes Signal (S1) in zumindest einer Zwischenfrequenzebene in ein zweites Signal (S2) in einer Übertragungsfrequenzebene zu wandeln und das zweite Signal (S2) als elektromagnetisches Signal (EM) über einen Ausgang (AUS) auszugeben,
ein drittes Signal (S3) als elektromagnetisches Signal (EM) über einen Eingang (EIN) zu empfangen, und
das dritte Signal (S3) in der Übertragungsfrequenzebene in ein viertes Signal (S4) in der zumindest einen Zwischenfrequenzebene zu wandeln,

wobei das dritte Signal (S3) vom zweiten Signal (S2) abgeleitet ist,
wobei das Sende-/Empfangsgerät (SE) eingerichtet ist, ein Testsignal (TS) zu erzeugen und in den Analogteil (ANA) als das erste Signal (S1) einzuspeisen sowie den Analogteil (ANA) zu prüfen, indem das Testsignal (TS) und das vierte Signal (S4) miteinander verglichen werden.

## Beschreibung

### Technisches Gebiet

Die Anmeldung betrifft ein Sende-/Empfangsgerät für ein Senden und ein Empfangen eines elektromagnetischen Signals sowie ein Verfahren zum Prüfen eines Sende-/Empfangsgeräts für ein Senden und ein Empfangen eines elektromagnetischen Signals. Die Anmeldung betrifft weiter eine Prüfeinrichtung für ein Sende-/Empfangsgerät sowie eine Verwendung der Prüfeinrichtung. Ein solches Sende-/Empfangsgerät findet z. B. als Objektsimulator für einen Fahrzeugradarsensor Anwendung.

### Hintergrund

In DE102021131263A1 wird ein Verfahren und ein Radarzielsimulator zum Erzeugen eines simulierten Radarechosignals beschrieben. Für die Tests von Radarsensoren, z. B. für automatisierte Fahrzeuge, werden Radarzielsimulatoren verwendet, die ein Radarsignal eines zu testenden Radarsensors detektieren, auf Basis eines Echtzeitmodells ein Radarecho des Signals berechnen und ein verzögertes, dem berechneten Echo entsprechendes Antwortsignal erzeugen und auf den zu testenden Radarsensor strahlen. Dem Radarsensor wird auf diese Weise die Erfassung eines physischen Ziels vorgespielt.

### Übersicht

Bei einem Sende-/Empfangsgerät für ein Senden und ein Empfangen eines elektromagnetischen Signals ist das elektromagnetischen Signal zum Austausch mit einem Sensor zur Objektdetektion vorgesehen. Das Sende-/Empfangsgerät kann z. B. Teil einer Simulationsumgebung für den Sensor zur Objektdetektion sein.

Das Sende-/Empfangsgerät weist einen Analogteil auf, der dazu eingerichtet ist,
- ein erstes Signal in zumindest einer Zwischenfrequenzebene in ein zweites Signal in einer Übertragungsfrequenzebene zu wandeln und das zweite Signal als elektromagnetisches Signal über einen Ausgang auszugeben,
- ein drittes Signal als elektromagnetisches Signal über einen Eingang zu empfangen, und das dritte Signal in der Übertragungsfrequenzebene in ein viertes Signal in der zumindest einen Zwischenfrequenzebene zu wandeln, wobei das dritte Signal vom zweiten Signal abgeleitet ist.

Das Sende-/Empfangsgerät ist eingerichtet, ein Testsignal zu erzeugen und in den Analogteil als erstes Signal einzuspeisen sowie den Analogteil zu prüfen, indem das Testsignal und das vierte Signal miteinander verglichen werden.

Ein Verfahren zum Prüfen eines solchen Sende-/Empfangsgeräts für ein Senden und ein Empfangen eines elektromagnetischen Signals, weist auf:
- Erzeugen eines Testsignals und Einspeisen des Testsignals als erstes Signal in den Analogteil,
- Ableiten des dritten Signals von einem zweiten Signal,
- Prüfen des Analogteils, indem das Testsignal und das vierte Signal miteinander verglichen werden.

Dabei ist das elektromagnetische Signal zum Austausch mit einem Sensor zur Objektdetektion vorgesehen, wobei das Sende-/Empfangsgerät einen Analogteil aufweist, der dazu eingerichtet ist, das erste Signal in zumindest einer Zwischenfrequenzebene in das zweite Signal in einer Übertragungsfrequenzebene zu wandeln und das zweite Signal als elektromagnetisches Signal über einen Ausgang auszugeben. Der Analogteil ist weiter eingerichtet, ein drittes Signal als elektromagnetisches Signal über einen Eingang zu empfangen und das dritte Signal in der Übertragungsfrequenzebene in ein viertes Signal in der zumindest einen Zwischenfrequenzebene zu wandeln.

Mit diesem Sende-/Empfangsgerät bzw. dem entsprechenden Verfahren ist es dann möglich, einen Selbsttest des Sende-/Empfangsgeräts und insbesondere des Analogteils auszuführen. Der Selbsttest ist damit direkt am Einsatzort des Sende-/Empfangsgerätes möglich, z. B. bei einem Verwender der Simulationsumgebung, welche das Sende-/Empfangsgerät aufweist. Das Sende-/Empfangsgerät muss nicht mehr für eine neue Kalibrierung an den Hersteller zurückgeschickt werden.

Außerdem ist das Sende-/Empfangsgerät robust, da für den beschriebenen Selbsttest bzw. die Prüfung des Sende-/Empfangsgeräts keine zusätzlichen oder nur passive Komponenten wie Filter notwendig, die kaum eine Alterung unterliegen. Weiterhin zeichnet sich z. B. solch ein Sende-/Empfangsgerät dadurch aus, dass es einen Prüfmodus aufweist, in dem der Selbsttest durchgeführt und einen Arbeitsmodus, bei dem das Sende-/Empfangsgerät als Objektsimulator, auch Zielsimulator genannt, für den Sensor zur Objektdetektion verwendet wird. Diese beiden Modi sind zeitlich disjunkt und können getrennt voneinander ausgeführt werden.

Ein solches Sende-/Empfangsgerät kann also als Objektsimulator eingesetzt werden, welcher die Möglichkeit zum Selbsttest aufweist. Entsprechend ermöglicht das Verfahren zum Prüfen des Sende-/Empfangsgeräts eine einfache und/oder robuste Art und Weise der Selbstprüfung eines solchen Sende-/Empfangsgeräts.

Das Sende-/Empfangsgerät für ein Senden und ein Empfangen eines elektromagnetischen Signals ist beispielsweise ein Radargerät oder Radarsensor, der entsprechende Radarsignale als elektromagnetisches Signal versendet und auch empfängt. Es kann sich jedoch auch um ein Lidargerät handeln, das entsprechende Lidarsignale als elektromagnetisches Signal versendet und empfängt. Mit solchen Sende-/Empfangsgeräten ist es möglich, einen Radar- bzw. Lidarsensor in seiner Funktion zu prüfen, indem das Sende-/Empfangsgerät Radar- oder Lidarsignale zurück an den Radarsensor sendet, die der Radarsensor bzw. Lidarsensor als reflektierte Radarsignale bzw. Lidarsignale auf die von ihm ausgesendeten Radar- bzw. Lidarsignale interpretiert. Damit können solche Sende-/Empfangsgeräte verschiedene Umgebungen mit verschiedenem Reflexionsverhalten nach Vorgaben simulieren. Für das Radar- bzw. Lidargerät können durch solche synthetisch hergestellten Reflexionssignale die Umgebungen mit simulierten Objekten simuliert werden.

Die Simulationsumgebung, in der sich das Sende-/Empfangsgerät befinden kann, kann z. B. durch Absorber so ausgestaltet sein, dass sie keine Radar- oder Lidarsignale reflektiert. Damit ist also eine gesteuerte Reflexion, die durch ein oder mehrere Sende-/Empfangsgeräte hergestellt wird, möglich, um quasi beliebige Umgebungen für den Radarsensor bzw. Lidarsensor zu schaffen.

Das Sende-/Empfangsgerät im Arbeitsmodus empfängt also das elektromagnetische Signal vom Sensor zur Objektdetektion, z. B. der Radar- oder der Lidarsensor, wobei das Sende-/Empfangsgerät ein vom elektromagnetischen Signal abgeleitetem Empfangssignal an einen Rechner oder an einen programmierbaren Logikbaustein weitergibt, der in Abhängigkeit von diesem Empfangssignal und weiteren abgespeicherten Daten das Sende-/Empfangsgerät anweist, ein entsprechendes simuliertes Reflexionssignal auszusenden. Konkret empfängt das Sende-/Empfangsgerät das dritte Signal im Arbeitsmodus, generiert ein Echosignal, z. B. zur Simulation eines Objektes, und gibt das zweite Signal in Abhängigkeit von dem Echosignal aus. Die Generierung des Echosignals kann dabei eine Berechnung und/oder eine analoge Generierung z. B. durch Verzögerungsglieder, Dämpfer oder ähnliches umfassen.

Das elektromagnetische Signal kann also z. B. als ein durch das Sende-/Empfangsgerät über eine Antenne ausgestrahltes Hochfrequenzsignal oder als ein über einen Laser ausgestrahltes optisches Signal verstanden werden.

Der Sensor zur Objektdetektion ist dann beispielsweise der Radar- oder Lidarsensor, für den das Sende-/Empfangsgerät das reflektierte Signal simuliert. Es sind andere Sensoren denkbar, die über ein elektromagnetisches Signal ein oder mehrere Objekte detektieren können.

Das Sende-/Empfangsgerät weist einen Analogteil auf, der in zumindest einer Zwischenfrequenzebene ein erstes Signal in ein zweites Signal in einer Übertragungsfrequenzebene wandelt. Diese Wandlung kann z. B. in Stufen über mehrere Zwischenfrequenzen auf einer jeweiligen Zwischenfrequenzebene durchgeführt werden oder auf einmal von einer Zwischenfrequenz auf einer Zwischenfrequenzebene in die Übertragungsfrequenz in der Übertragungsfrequenzebene. Die Zwischenfrequenzebene oder auch mehrere davon liegen bzgl. der Frequenz unterhalb der Frequenz der Übertragungsfrequenzebene. In der Zwischenfrequenzebene ist eine einfachere Signalbearbeitung im Analogteil möglich als in höheren Frequenz der Übertragungsfrequenzebene. Die Übertragungsfrequenz für das elektromagnetische Signal liegt beispielsweise bei 20 GHz oder 77 GHz oder anderen Frequenzen im Mikrowellenbereich, welche für Radarsignale geeignet sind. Bei einem Radarsignal ist der Ausgang dann beispielsweise eine oder mehrere Hornantennen oder ein sogenanntes Antennenarray oder andere Antennenarten bzw. Antennenkonfigurationen oder auch ganz ohne Antennen ausgeführt. Bei der Verwendung von Lidarsignalen kommt es zu einer Wandlung in ein optisches Signal, das als elektromagnetisches Signal ausgegeben wird. Diese optischen Signale liegen beispielsweise im nahen Infrarotbereich oder aber auch im sichtbaren Bereich des Lichts. Weitere Lichtbereiche sind möglich.

Im Analogteil wird die Wandlung von der zumindest einen Zwischenfrequenzebene auf die Übertragungsfrequenzebene beispielsweise durch eine sogenannte Mischung erreicht. Dabei können nicht gewollte Mischprodukte ausgefiltert werden. Auch Verstärker sind im Analogteil vorgesehen. Insbesondere solche aktiven Komponenten wie z. B. Mischer oder Verstärker unterliegen einem Alterungsprozess, der eine Kalibrierung und ggf. Anpassung von Parametern erforderlich macht. Die Präzision, die durch die Kalibrierung und ggf. Anpassung von Parametern erreicht werden kann, ist vorteilhaft, um konstant ein gleiches elektromagnetisches Signal aussenden zu können, mit dem der Sensor zur Objektdetektion getestet werden kann.

Entsprechend weist das Sende-/Empfangsgerät im Empfangsteil des Analogteils eine oder mehrere Empfangsantennen für den Empfang des elektromagnetischen Signals am Eingang auf. Auch ein Heruntermischen des empfangenen elektromagnetischen Signals in die zumindest eine Zwischenfrequenzebene und eine entsprechende Verstärkung des empfangenen und heruntergemischten Signals sind vorgesehen.

Das Sende-/Empfangsgerät ist eingerichtet, ein Testsignal zu erzeugen und in den Analogteil und dabei in den Sendeteil als erstes Signal einzuspeisen. Dieses Testsignal kann auch in dem Analogteil selbst erzeugt werden oder aber in einem Digitalteil. Es kann alternativ auch von außen eingespeist werden.

Dieses Testsignal dient dazu, einen ersten Signalpfad im Sendeteil bis zum Versenden des elektromagnetischen Signals zu prüfen. Das Testsignal dient ebenfalls dazu, einen zweiten Signalpfad im Empfangsteil zu prüfen. Das Testsignal dient insbesondere dazu den ersten und den zweiten Signalpfad gemeinsam zu prüfen. Solch ein Selbsttest entspricht einer Kalibrierung, welche sonst beispielsweise beim Hersteller solch einer Simulationsumgebung mit dem Sende-/Empfangsgerät regelmäßig vorzunehmen wäre.

Das erste Signal ist demnach das Testsignal, das in der zumindest einen Zwischenfrequenzebene durch den ersten Signalpfad, den Sendesignalpfad, läuft. Das zweite Signal wird aus dem ersten Signal durch eine Wandlung in die Übertragungsfrequenzebene gewonnen. Das zweite Signal wird als elektromagnetisches Signal über den Ausgang ausgegeben, entweder in den Raum, der sich am Ausgang befindet, so dass sich das zweite Signal als elektromagnetische Welle ausbreitet oder in ein Verbindungsteil, das am Ausgang angebracht ist und den Ausgang mit dem Eingang verbindet. Das dritte Signal wird als elektromagnetisches Signal über den Raum oder über das Verbindungsteil am Eingang empfangen. Das vierte Signal wird aus dem dritten Signal durch eine Wandlung in die zumindest eine Zwischenfrequenzebene abgeleitet und dient zum Vergleich mit dem Testsignal. Diese Signale können im Analogteil Verstärkungen und Filterungen sowie weiterer Signalformungen unterworfen werden.

Eine Prüfeinrichtung ist zum Prüfen des Sende-/Empfangsgeräts eingerichtet. Die Prüfeinrichtung kann beispielsweise eine Reflexionseinrichtung für das zweite Signal zur Ableitung des dritten Signals aufweisen. Über die Reflexionseinrichtung kann dann das über den Ausgang ausgegebene zweite Signal als drittes Signal zu dem Eingang zurückreflektiert werden.

Weiterhin kann die Prüfeinrichtung zu Kalibrierung des Analogteils verwendet werden, wobei gespeicherte Kalibrierungsdaten des Analogteils in Abhängigkeit von dem Vergleich von Testsignal mit viertem Signal verändert werden. Ein Ändern der Kalibrierungsdaten kann ein überschreiben der vorhandenen Kalibrierungsdaten mit den neuen aus dem Vergleich gewonnenen Kalibrierungsdaten umfassen. Es sind auch anderen Möglichkeiten denkbar, bei denen eine Differenz zum vorherigen Wert gespeichert wird.

In einer Ausführungsform ist das Verbindungsteil zur Ableitung des dritten Signals vom zweiten Signal zwischen dem Ausgang und dem Eingang vorgesehen. Über solch eine definierte Verbindung über das Verbindungsteil ist dann vorgegeben, dass das zweite Signal durch die Umgebung nicht in unvorhergesehener Weise beeinflusst wird, sondern durch das Verbindungsteil ist die Veränderung, die auf das zweite Signal zur Ableitung des dritten Signals wirkt, von vornherein bekannt. Damit ist beim Selbsttest des Sende-/Empfangsgeräts keine Beachtung weiterer Faktoren notwendig. Das Verbindungsteil kann als Wellenleiter oder im optischen Fall als Glasfaser ausgebildet sein.

In einer Ausführungsform ist das Verbindungsteil für eine Dämpfung und/oder eine Phasenverschiebung und/oder eine Frequenzverschiebung des zweiten Signals zur Ableitung des dritten Signals ausgebildet. Das Verbindungsteil kann demnach eine entsprechende Dämpfung aufweisen oder auch für eine Phasenverschiebung oder eine Frequenzverschiebung sorgen oder für eine Kombination dieser Veränderungen.

In einer weiteren Ausführungsform weist das Verbindungsteil zumindest ein λ/4- und/oder zumindest ein λ/2- und/oder zumindest ein ¾ λ-Verzögerungsetement aufweist. Mit solchen definierten Verzögerungen um die entsprechende Wellenlänge des elektromagnetischen Signals, die mit λ bezeichnet ist, können dann entsprechende Tests des Analogteils, wie zum Beispiel Fehleridentifikation, durchgeführt werden.

Darüber hinaus kann das Verbindungsteil einen Hochpassfilter aufweisen. Damit kann erreicht werden, dass nur Frequenzen über einer vorgegebenen Grenzfrequenz des Hochpassfilters das Verbindungsteil passieren können. Alle niedrigeren Frequenzen werden durch den Hochpassfilter herausgefiltert. Damit können beispielsweise unerwünschte Mischprodukte eliminiert werden.

In einer Ausführungsform ist das Sende-/Empfangsgerät dazu eingerichtet, aus dem Vergleich von Testsignal mit viertem Signal eine Dämpfung und/oder eine Verstärkung des Analogteils abzuleiten. Wie beschrieben können sowohl der Sendesignalpfad im Analogteil zum Versenden des elektromagnetischen Signals als auch der Empfangssignalpfad im Analogteil zum Empfangen des elektromagnetischen Signals jeweils Verstärker aufweisen, die das entsprechende Signal verstärken. Weiterhin weist der gesamte Signalpfad im Analogteil sowohl im Sendeteil als auch im Empfangsteil eine Dämpfung auf. Darüber hinaus liegen entsprechende Dämpfungen des Signals durch das Versenden des elektromagnetischen Signals über die Atmosphäre oder über das Verbindungsteil vor. Durch eine Gesamtbetrachtung ist dann das Sende-/Empfangsgerät in der Lage zu bestimmen, ob insgesamt eine Dämpfung oder Verstärkung des Signals, das die Signalpfade und den Weg als elektromagnetisches Signal zurücklegt, vorliegt.

Des Weiteren kann in Ausführungsformen vorgesehen sein, dass das Sende-/Empfangsgerät eingerichtet ist, aus dem Vergleich von Testsignal und viertem Signal eine Phasendifferenz zwischen dem Testsignal und dem vierten Signal abzuleiten. Dies kann digital oder analog ausgewertet werden, sodass damit identifizierbar ist, welche Phasendifferenz der Signalpfad dem Testsignal durch das Analogteil und gegebenenfalls das Verbindungteil bzw. die Atmosphäre letztlich aufgeprägt. Daher kann das Sende-/Empfangsgerät aus dieser Phasendifferenz eine Laufzeit des Testsignals durch das Analogteil ermitteln. Die Laufzeit durch das Verbindungsteil ist vorbekannt, auch wenn eine Reflexionsebene verwendet wird, ist dies vorbekannt und somit ist es möglich, die Laufzeit, die nur im Analogteil zurückgelegt wird, zu bestimmen.

In Ausführungsformen kann vorgesehen sein, dass das Sende-/Empfangsgerät, einen Digitalteil aufweist, der dazu eingerichtet ist, das Testsignal zu erzeugen und als erstes Signal in den Analogteil einzuspeisen sowie das vierte Signal auszuwerten und z. B. den Vergleich von Testsignal und viertem Signal durchzuführen. Zur Durchführung des Vergleichs kann der Digitalteil einen Vergleicher aufweisen, der das Testsignal mit dem vierten Signal vergleicht. Der Vergleicher kann z. B. einen Prozessor und/oder andere signalverarbeitende Schaltungen aufweisen. Das als erstes Signal in den Analogteil einzuspeisende Testsignal kann in einem Speicher vorliegen, aus dem der Digitalteil das Testsignal entnimmt, um es in den Analogteil einzuspeisen. Es können zusätzlich oder alternativ jedoch auch Schaltungen oder Funktionen vorliegen, mittels derer das Testsignal jeweils erzeugt wird.

Darüber hinaus ist es möglich, dass das Testsignal als ein Sinussignal oder eine Überlagerung von mehreren Sinussignalen ausgebildet ist. Sinussignale sind für solch einen Selbsttest bzw. Test des Analogsignals als besonders geeignet anzusehen. Alternativ können auch andere periodische oder aperiodische Signale verwendet werden.

Wie beschrieben sind die elektromagnetischen Signale zum Austausch mit dem Sensor zur Objektdetektion vorgesehen. D. h. die elektromagnetischen Signale weisen eine solche Übertragungsfrequenz, dass der Sensor zur Objektdetektion in der Lage ist, sie korrekt zu empfangen. Ein solcher Sensor zur Objektdetektion kann z. B. ein Radarsensor oder ein Lidarsensor sein und die Übertragungsfrequenz liegt dementsprechend im Radarbereich oder im Lidarbereich.

In Ausführungsformen ist das Sende-/Empfangsgerät eingerichtet, mittels der elektromagnetischen Signale zu detektierende Objekte für Sensor zur Objektdetektion, z. B. den Radarsensor oder den Lidarsensor, zu simulieren. Wie oben angegeben kann durch das Sende-/Empfangsgerät oder eine Mehrzahl von diesen Sende-/Empfangsgeräten eine beliebige Umgebung für den Sensor zu Objektdetektion, z. B. den Radarsensor oder den Lidarsensor, simuliert werden. Diese Simulation umfasst das Aussenden von elektromagnetischen Signale entsprechend dieser simulierten Umgebung, so als ob diese elektromagnetischen Signale an diesen Objekten der simulierten Umgebung reflektiert worden wären.

Es ist darüber hinaus vorgesehen, dass das Sende-/Empfangsgerät eingerichtet ist, eine Minimaldistanz des zu simulierenden Objektes unter Verwendung der Laufzeit des Testsignals und den Analogteil zu ermitteln.

In einer Ausführungsform werden gespeicherte Kalibrierungsdaten des Analogteils in Abhängigkeit von dem Vergleich des Testsignals mit dem vierten Signal verändert. Sollte es über die Zeit Veränderungen am Analogteil beispielsweise durch eine Verschlechterung eines oder mehrerer Verstärker ergeben, kann dies in den Kalibrierungsdaten berücksichtigt werden, sodass solche Langzeitveränderungen keine negativen Auswirkungen auf die Funktionsweise des Sende-/Empfangsgeräts haben.

Entsprechendes gilt für das Verfahren zum Prüfen des Sende-/Empfangsgeräts.

Das Verfahren kann insbesondere mehrfach durchlaufen werden. Bei den verschiedenen Durchläufen kann z. B. verschiedene Verzögerungselemente verwendet werden. Der Analogteil des Sende-/Empfangsgeräts kann so unter verschiedenen Umständen getestet werden, bei denen die Ableitung des dritten Signals vom zweiten Signal variiert. Aus den Ergebnissen der verschiedenen Vergleiche bei den mehrfachen Durchläufen des Verfahrens kann dann auf den Zustand des Analogteils des Sende-/Empfangsgeräts geschlossen werden und ggf. können Parameter verändert und Fehler erkannt werden.

### Figurenliste

Ausführungsbeispiele der Erfindung sind in der Zeichnung dargestellt und werden in der nachfolgenden Beschreibung näher erläutert.

Es zeigen
Figur 1 ein Blockschaltbild des Sende-/Empfangsgeräts,
Figur 2 ein weiteres Blockschaltbild des Sende-/Empfangsgeräts,
Figur 3 ein Flussdiagramm des Verfahrens gemäß der Anmeldung,
Figur 4 eine schematische Darstellung der Prüfeinrichtung und
Figur 5 eine schematische Darstellung der Simulationsumgebung.

Es werden in den Figuren die gleichen Bezugszeichen für gleiche oder ähnliche Elemente verwendet. Die Darstellungen in den Figuren können nicht maßstäblich sein.

### Figurenbeschreibung

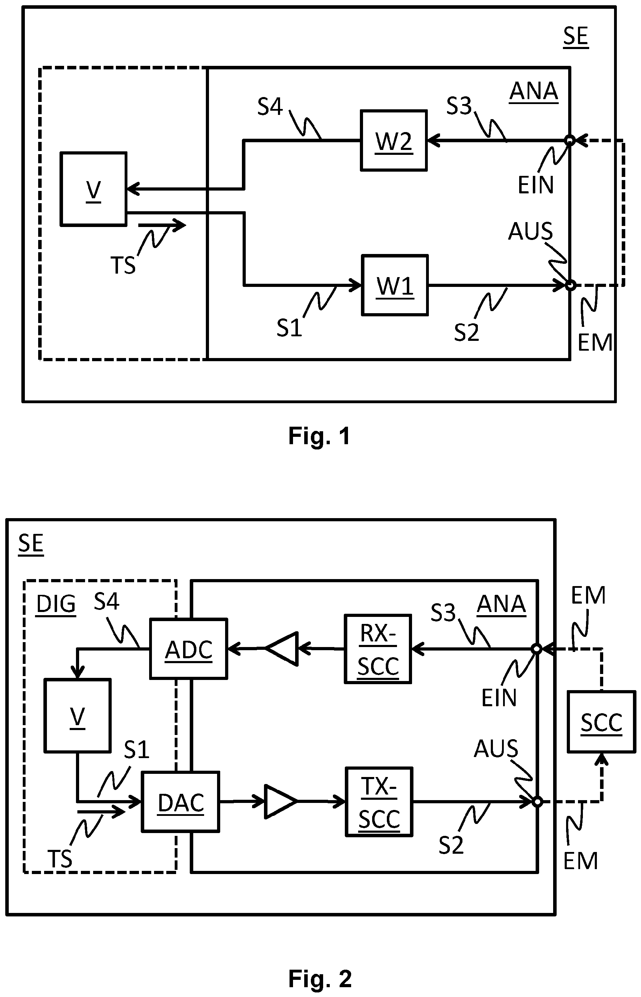

Figur 1 zeigt ein Sende/-Empfangsgerät SE. Das Sende/-Empfangsgerät SE weist einen Vergleicher V auf, der ein Testsignal TS erzeugt. Dieses Testsignal TS wird in einen Analogteil ANA gegeben und als erstes Signal S1 in einen ersten Wandler W1 geführt. Der erste Wandler W1 wandelt daraus das zweite Signal S2, das über den Ausgang AUS als elektromagnetisches Signal EM ausgegeben wird. D. h., das elektromagnetische Signale EM liegt dann als sich ausbreitende elektromagnetische Welle vor. Optional kann zwischen Ausgang AUS und Eingang EIN ein Verbindungsteil SCC vorgesehen sein, welches das elektromagnetische Signal EM vom Ausgang AUS zum Eingang EIN leitet.

Zwischen Ausgang AUS und Eingang EIN kann auch eine Ausbreitung im Raum vorgesehen sein. Eine Richtungsänderung des elektromagnetischen Signals EM kann dann z. B. durch das Vorsehen einer Reflexionseinrichtung REF erreicht werden.

Der erste Wandler W1 kann z. B. ein Mischer sein, der das erste Signal S1 von zumindest einer Zwischenfrequenzebene in eine Übertragungsfrequenzebene hochmischt. Daher kann dann das zweite Signal S2 ein Hochfrequenzsignal in der Übertragungsfrequenz sein, für das z. B. ein Wellenleiter am Ausgang des ersten Wandlers W1 angeschlossen ist.

Der Vergleicher V kann optional Bestandteil des Analogteils ANA sein. Optional kann der Vergleicher V auch außerhalb des Analogteils ANA vorgesehen sein.

Über den Eingang EIN wird das elektromagnetische Signal EM empfangen. Handelt es sich bei dem elektromagnetischen Signal EM zum Beispiel um ein Radarsignal, so können z. B. sowohl am Ausgang AUS als auch am Eingang EIN entsprechende Antennen wie Hornantennen, aber auch andere Antennen, vorgesehen sein.

Handelt es sich bei dem elektromagnetischen Signal EM zum Beispiel um ein optisches Signal wie z. B. ein Lidarsignal, dann kann am Ausgang AUS ein Laser oder ein Laserarray vorgesehen sein und am Eingang EIN kann ein Lichtempfänger oder ein Feld von solchen Lichtempfängern vorgesehen sein. Dann liegt also am Ausgang AUS ein elektrisch-optischer Wandler wie ein Laser vor und am Eingang EIN liegt ein optisch-elektrischer Wandler, wie z. B. eine Fotodiode, vor.

Das dritte Signal S3 wird vom Eingang EIN zum zweiten Wandler W2 z. B. über Wellenleiter übertragen und dort in das vierte Signal S4 gewandelt. Diese Wandlung wird dann z. B. durch ein Heruntermischen von der Übertragungsfrequenz der Übertragungsfrequenzebene in die zumindest eine Zwischenfrequenz der zumindest einen Zwischenfrequenzebene erreicht.

Das vierte Signal S4 wird dann im Vergleicher V mit dem Testsignal TS verglichen und daraus beispielsweise eine Dämpfung und/oder eine Phasenverschiebung und/oder eine Frequenzverschiebung zu ermitteln. Die ermittelte eine Dämpfung und/oder eine Phasenverschiebung und/oder eine Frequenzverschiebung bezieht sich dann auf den Analogteil des Sende-/Empfangsgeräts SE und gibt Auskunft über seinen Zustand. Insbesondere können die Werte z. B. mit Sollwerten verglichen werden und es können z. B. daraus dann abgeleitete Parameter bestimmt werden.

Weitere mögliche Komponenten des Sende-Empfangsgeräts SE wie z. B. Filter oder z. B. Verstärker sind vorliegend in Figur 1 der Übersichtlichkeit halber nicht dargestellt.

Figur 2 zeigt ein weiteres Blockschaltbild des Sende-/Empfangsgeräts SE. Vorliegend ist der Vergleicher V in einem Digitalteil DIG angeordnet. Dementsprechend wird das erste Signal S1 bzw. Testsignal von einem Digitalsignal in ein Analogsignal durch einen Digitalanalogwandler DAC gewandelt.

Dieses erste Signal S1 kann gefiltert und verstärkt werden und dann im Sendewandler TX-SCC von der Zwischenfrequenz zum zweiten Signal S2 in der Übertragungsfrequenz gewandelt werden, um dann über den Ausgang AUS als elektromagnetisches Signal EM ausgesendet zu werden.

Vorliegend ist das Verbindungsteil SCC beispielhaft mit dem Ausgang AUS und dem Eingang EIN verbunden, um so eine Verbindung für das elektromagnetische Signal EM zwischen dem Ausgang AUS und dem Eingang EIN zu bilden. Das Verbindungsteil SCC kann die Dämpfung, die Phase und/oder die Frequenz verändern. Es können sogar aktive Teile in dem Verbindungsteil vorgesehen sein.

Dann wird wiederum über den Eingang EIN das elektromagnetische Signal EM in den Empfangsteil des Analogteils ANA eingegeben und als drittes Signal S3 kommt es dann in den Empfangswandlern RX-SCC. Der Empfangswandler RX-SCC mischt das dritte Signal S3 aus der Übertragungsfrequenzebene in die Zwischenfrequenzebene, so dass in der Zwischenfrequenzebene am Ausgang des Empfangswandlers RX-SCC das vierte Signal S4 vorliegt. Das analoge vierte Signal S4 wird gegebenenfalls verstärkt und gefiltert und dann in einen Analogdigitalwandler ADC gegeben, der daraus das digitale vierte Signal S4 erzeugt, das in den Vergleicher V für den Vergleich mit dem Testsignal TS eingegeben wird. Der Vergleicher V kann beispielsweise auf einem Prozessor ablaufen, aber auch andere Schaltungen sind für diesen Vergleich möglich.

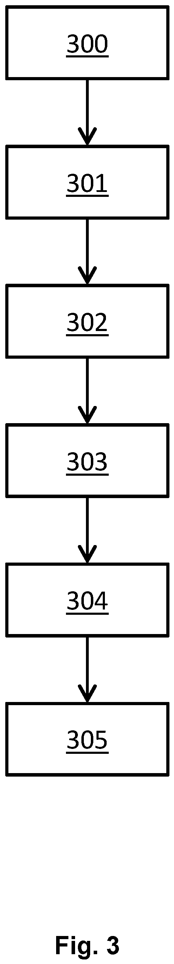

Figur 3 zeigt ein Flussdiagramm des Verfahrens zum Prüfen eines Sende-/Empfangsgeräts SE.

In 300 wird das Testsignal TS erzeugt und als erstes Signal S1 in den Analogteil ANA eingespeist. Das Testsignals TS kann z. B. durch einen Signalgenerator erzeugt werden oder aus einem Speicher ausgelesen werden. Das Erzeugen des Testsignals TS und das Weitergeben an den Analogteil ANA kann z. B. durch den Vergleicher V durchgeführt werden.

In 301 wird das erste Signal S1 in das zweite Signal S2 gewandelt. Diese Wandlung umfasst ein Hochmischen von der Zwischenfrequenz auf die Übertragungsfrequenz.

In 302 wird das zweite Signal S2 über den Ausgang AUS als elektromagnetisches Signal EM ausgegeben.

In 303 wird das elektromagnetische Signal EM als von dem zweiten Signal S2 abgeleitete dritte Signal S3 empfangen. Diese Ableitung kann zum Beispiel durch das Verbindungsteil SCC erfolgen, welches den Ausgang AUS mit dem Eingang EIN verbindet und das elektromagnetische Signal EM so leitet.

In 304 wird das dritte Signal S3 in das vierte Signal S4 gewandelt. Diese Wandlung umfasst ein Heruntermischen von der Übertragungsfrequenz auf die Zwischenfrequenz.

In 305 werden das Testsignal TS und das vierte Signal S4 miteinander verglichen. In Abhängigkeit von dem Vergleich kann dann beispielsweise eine Kalibrierung des Sende-/Empfangsgeräts SE erfolgen.

Zum Beispiel kann aus dem Vergleich eine Dämpfung oder eine Verstärkung des Analogteils ANA abgeleitet werden. Außerdem kann aus dem Vergleich zwischen dem Testsignal TS und dem vierten Signal S4 eine Phasendifferenz abgeleitet wird.

Das Verfahren kann insbesondere mehrfach durchlaufen werden. Bei den verschiedenen Durchläufen des Verfahrens können dann z. B. Verbindungsteile mit verschiedenen Verzögerungselementen, z. B. einem λ/4- Verzögerungselement und/oder einem λ/2- Verzögerungselement und/oder einem ¾ λ-Verzögerungselement, verwendet werden. Durch einen Vergleich der Ergebnisse mit den verschiedenen Verzögerungen können dann Rückschlüsse darauf gezogen werden, wie gut der Kalibrierungszustand des Sende-/Empfangsgeräts SE ist und ggf. können gespeicherte Kalibrierungsdaten, insbesondere des Analogteils ANA in Abhängigkeit von dem Vergleich verändert werden. Außerdem können Fehler während der Messung erkannt werden.

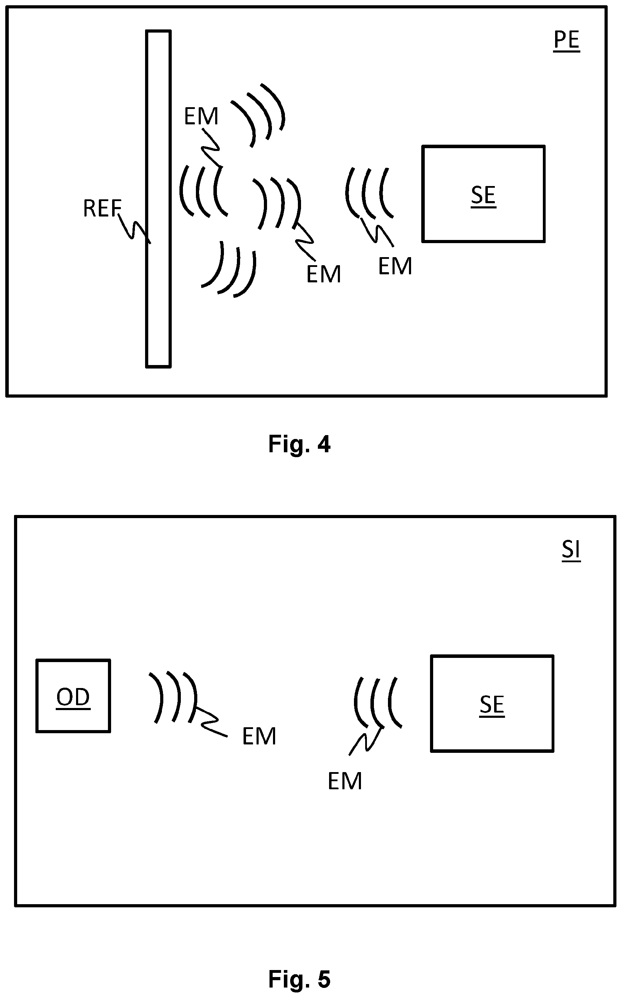

Figur 4 zeigt eine Prüfeinrichtung PE, in der sich das Sende-/Empfangsgerät SE befindet. Wie oben dargestellt, emittiert das Sende-/Empfangsgerät SE über den Ausgang AUS das elektromagnetische Signal EM, das vorliegend an einer Reflexionseinrichtung REF beispielsweise einer Platte reflektiert wird, um das Reflexionssignal dann von dem Sende-/Empfangsgeräts SE über den Eingang EIN dann wieder zu empfangen. Dies stellt eine Alternative zum Verbindungsteil SCC dar.

In Figur 5 wird eine Simulationsumgebung SI gezeigt, und zwar mit dem Sende-/Empfangsgerät SE, das ein elektromagnetisches Signal EM emittiert, und einem Sensor zur Objektdetektion OD beispielsweise einen Radarsensor oder einen Lidarsensor. Der Sensor zur Objektdetektion OD versendet ebenfalls ein solches elektromagnetisches Signal EM. Bestimmt der Sensor zur Objektdetektion OD seine Umgebung beispielsweise über das Prinzip des Time-of-Flights (deutsch: Laufzeitprinzip), wird die Laufzeit ausgewertet. Bei Radarsensoren wird in der Regel der Dopplereffekt, d. h. eine Frequenzverschiebung genutzt. Beim Lidarsensor wird die Laufzeitauswertung häufig verwendet, aber auch hier ist es möglich, eine Dopplerverschiebung anzuwenden. Es sind jedoch auch andere Messverfahren möglich.

### Bezugszeichenliste

- SE: Sende-/Empfangsgerät
- ANA: Analogteil
- EM: elektromagnetische Signale
- S1, S2, S3, S4: Signale
- EIN: Eingang
- AUS: Ausgang
- TS: Testsignal
- W1, W2: Wandler
- V: Vergleicher
- SCC: Verbindungsteil
- TX-SCC: Sendewandler
- RX-SCC: Empfangswandler
- DIG: Digitalteil
- OD: Sensor zur Objektdetektion
- SI: Simulationsumgebung
- REF: Reflexionseinrichtung
- PE: Prüfeinrichtung
- 300-305: Verfahrensschritte

## Patentansprüche

1. Sende-/Empfangsgerät (SE) für ein Senden und ein Empfangen eines elektromagnetischen Signals (EM), wobei das elektromagnetische Signal (EM) zum Austausch mit einem Sensor zur Objektdetektion (OD) vorgesehen sind, wobei das Sende-/Empfangsgerät (SE) einen Analogteil (ANA) aufweist, der dazu eingerichtet ist,
ein erstes Signal (S1) in zumindest einer Zwischenfrequenzebene in ein zweites Signal (S2) in einer Übertragungsfrequenzebene zu wandeln und das zweite Signal (S2) als elektromagnetisches Signal (EM) über einen Ausgang (AUS) auszugeben,
ein drittes Signal (S3) als elektromagnetisches Signal (EM) über einen Eingang (EIN) zu empfangen, und
das dritte Signal (S3) in der Übertragungsfrequenzebene in ein viertes Signal (S4) in der zumindest einen Zwischenfrequenzebene zu wandeln, wobei das dritte Signal (S3) vom zweiten Signal (S2) abgeleitet ist,
wobei das Sende-/Empfangsgerät (SE) eingerichtet ist, ein Testsignal (TS) zu erzeugen und in den Analogteil (ANA) als das erste Signal (S1) einzuspeisen sowie den Analogteil (ANA) zu prüfen, indem das Testsignal (TS) und das vierte Signal (S4) miteinander verglichen werden.

2. Sende-/Empfangsgerät (SE) nach Anspruch 1, wobei ein Verbindungsteil (SCC) zur Ableitung des dritten Signals (S3) vom zweiten Signal (S2) zwischen dem Ausgang (AUS) und dem Eingang (EIN) vorgesehen ist.

3. Sende-/Empfangsgerät (SE) nach Anspruch 2, wobei das Verbindungsteil (SCC) für eine Dämpfung und/oder eine Phasenverschiebung und/oder eine Frequenzverschiebung des zweiten Signals (S2) zur Ableitung des dritten Signals (S3) ausgebildet ist.

4. Sende-/Empfangsgerät (SE) nach Anspruch 3, wobei das Verbindungsteil (SCC) zumindest ein λ/4- und/oder zumindest ein λ/2- und/oder zumindest ein ¾ λ-Verzögerungsetement aufweist.

5. Sende-/Empfangsgerät (SE) nach einem der Ansprüche 2 bis 4, wobei das Verbindungsteil (SCC) einen Hochpassfilter aufweist.

6. Sende-/Empfangsgerät (SE) nach einem der vorhergehenden Ansprüche, wobei das Sende-/Empfangsgerät (SE) dazu eingerichtet ist, aus dem Vergleich eine Dämpfung oder eine Verstärkung des Analogteils (ANA) abzuleiten.

7. Sende-/Empfangsgerät (SE) nach einem der vorhergehenden Ansprüche, wobei das Sende-/Empfangsgerät (SE) eingerichtet ist, aus dem Vergleich eine Phasendifferenz zwischen dem Testsignal (TS) und dem vierten Signal (S4) abzuleiten.

8. Sende-/Empfangsgerät (SE) nach Anspruch 7, wobei das Sende-/Empfangsgerät (SE) eingerichtet ist, aus der Phasendifferenz eine Laufzeit des Testsignals (TS) durch den Analogteil (ANA) zu ermitteln.

9. Sende-/Empfangsgerät (SE) nach einem der vorhergehenden Ansprüche, wobei das Sende-/Empfangsgerät (SE) einen Digitalteil (DIG) aufweist, der dazu eingerichtet ist, das Testsignal (TS) zu erzeugen und als erstes Signal (S1) in den Analogteil (ANA) einzuspeisen sowie den Vergleich durchzuführen.

10. Sende-/Empfangsgerät (SE) nach einem der vorhergehenden Ansprüche, wobei das Testsignal (TS) als ein Sinussignal oder eine Überlagerung von mehreren Sinussignalen ausgebildet ist.

11. Sende-/Empfangsgerät (SE) nach einem der vorhergehenden Ansprüche, wobei die elektromagnetischen Signale (EM) zum Austausch mit einem Radarsensor oder mit einem Lidarsensor vorgesehen sind.

12. Sende-/Empfangsgerät (SE) nach Anspruch 11, wobei das Sende-/Empfangsgerät (SE) eingerichtet ist, mittels der elektromagnetischen Signale (EM) zu detektierende Objekte für den Radarsensor oder den Lidarsensor zu simulieren.

13. Sende-/Empfangsgerät (SE) nach Anspruch 12, wobei das Sende-/Empfangsgerät (SE) eingerichtet ist, eine minimale Distanz des zu simulierenden Objektes unter Verwendung der Laufzeit des Testsignals durch den Analogteil (ANA) zu ermitteln.

14. Prüfeinrichtung (PE) zum Prüfen des Sende-/Empfangsgeräts (SE) nach einem der Ansprüche 1 bis 13, aufweisend zumindest ein Sende-/Empfangsgerät (SE) nach einem der Ansprüche 1 bis 13.

15. Prüfeinrichtung (PE) nach Anspruch 14, wobei die Prüfeinrichtung (PE) eine Reflexionseinrichtung (REF) für das zweite Signal (S2) zur Ableitung des dritten Signals (S3) aufweist.

16. Verwendung der Prüfeinrichtung (PE) nach Anspruch 14 oder 15 zur Kalibrierung des Analogteils (ANA), wobei gespeicherte Kalibrierungsdaten des Analogteils (ANA) in Abhängigkeit von dem Vergleich verändert werden.

17. Verfahren zum Prüfen eines Sende-/Empfangsgeräts (SE) für ein Senden und ein Empfangen eines elektromagnetischen Signals (EM), wobei das elektromagnetische Signal (EM) zum Austausch mit einem Sensor zur Objektdetektion (OD) vorgesehen ist, wobei das Sende-/ Empfangsgerät (SE) einen Analogteil (ANA) aufweist, der dazu eingerichtet ist,
ein erstes Signal (S1) in zumindest einer Zwischenfrequenzebene in ein zweites Signal (S2) in einer Übertragungsfrequenzebene zu wandeln und das zweite Signal (S2) als elektromagnetisches Signal (EM) über einen Ausgang (AUS) auszugeben,
ein drittes Signal (S3) als elektromagnetisches Signal (EM) über einen Eingang (EIN) zu empfangen,
das dritte Signal (S3) in der Übertragungsfrequenzebene in ein viertes Signal (S4) in der zumindest einen Zwischenfrequenzebene zu wandeln,
wobei das Verfahren aufweist:
Erzeugen eines Testsignals (TS) und Einspeisen des Testsignals (TS) als erstes Signal (S1) in den Analogteil (ANA),
Ableiten des dritten Signals (S3) vom zweiten Signal (S2)
Prüfen des Analogteils (ANA), indem das Testsignal (TS) und das vierte Signal (S4) miteinander verglichen werden.

18. Verfahren nach Anspruch 17, wobei aus dem Vergleich eine Dämpfung oder eine Verstärkung des Analogteils (ANA) abgeleitet wird.

19. Verfahren nach Anspruch 17 oder 18, wobei aus dem Vergleich zwischen dem Testsignal (TS) und dem vierten Signal (S4) eine Phasendifferenz abgeleitet wird.

20. Verfahren nach einem der Ansprüche 17 bis 19, wobei das Verfahren mehrfach durchgeführt wird.

21. Verfahren nach einem der Ansprüche 17 bis 20, wobei gespeicherte Kalibrierungsdaten des Analogteils (ANA) in Abhängigkeit von dem Vergleich verändert werden.
